# EUROPEAN PATENT SPECIFICATION

(11) **EP 1 930 384 B1**
(45) Date of publication and mention of the grant of the patent: **28.12.2011**
(21) Application number: 06798464.1
(22) Date of filing: 29.09.2006
(51) Int. Cl.: C09D 11/00, E04F 13/08

(54) **INK FOR JET PRINTER**
TINTE FÜR STRAHLDRUCKER
ENCRE POUR IMPRIMANTE A JET

(30) Priority: 30.09.2005 JP 2005287027
(43) Date of publication of application: 11.06.2008
(73) Proprietor: DIC Corporation, Tokyo (JP)
(72) Inventor: KUMAGAI, Akio, Kitaadachi-gun Saitama 362-8577 (JP); SHIMAMURA, Yoshinosuke, Kitaadachi-gun Saitama 362-8577 (JP); TANAKA, Shigehiro, Kitaadachi-gun Saitama 362-8577 (JP); OBAYASHI, Ryouichi, Takaishi-shi Osaka 592-0001 (JP)
(74) Representative: Albrecht, Thomas
(86) International application number: PCT/JP2006/319496
(87) International publication number: WO 2007/037387

(56) References cited:
- GB-A- 1 603 062
- JP-A- 10 259 336
- JP-A- 53 123 210
- US-A1- 2004 068 031

## Description

### TECHNICAL FIELD

The present invention relates to an ink for a jet printer that is used for forming a picture with enhanced design properties on an exterior wall siding material using an inkjet method.
The invention also relates to a method of producing an exterior wall siding material with a picture formed by an inkjet method, and an exterior wall siding material produced using that method.

### BACKGROUND ART

Conventionally, methods that use gravure printing or roller application have generally been used for forming pictures on exterior wall siding materials (see patent reference 1 and patent reference 2). However, because gravure printing uses an expensive printing plate, high costs mean that altering, improving or modifying the picture is problematic. Furthermore, with gravure printing and roller application, printing can only be conducted onto a flat substrate surface, and achieving a picture with a third dimension feel has proven difficult.
As a result, printing to a substrate for an exterior wall siding material using an inkjet method has been proposed (see patent reference 3). In the case of printing using an inkjet method, alterations to the design can be conducted simply and freely, on an on-demand basis, and a printed layer can be formed even if the printing surface is uneven, meaning a design with a third dimension feel can be provided. The properties required for a jet printer ink used on an exterior wall siding material include not only extremely high level of light resistance to prevent the picture fading, but also favorable weather resistance to prevent degradation of the printed layer itself when exposed to sunlight and the open air over an extended period. Moreover, various physical strength properties, and particularly durability, are also required, including ensuring that the adhesion between the printed layer and the underlying substrate or undercoat layer, or the adhesion between the printed layer and a clear layer formed as a top coat to protect the printed sections does not degrade even when exposed to sunlight and the open air over an extended period.
However, if conventional jet printer inks used in typical inkjet methods are used on exterior walls, then because they lack the durability and weather resistance described above, they are inadequate for exterior wall applications, and even today, there are no exterior wall siding materials available commercially that have been fabricated using inkjet methods.

Accordingly, the development of an ink for a jet printer in which the pigment particles have been microparticulated sufficiently to enable inkjet recording, and those pigment particles have been dispersed stably within a solvent, and which when used to form a picture on an exterior wall, yields a picture with excellent levels of light resistance and weather resistance has been keenly sought.
Initially, jet printer inks prepared by dissolving or dispersing a colorant in a mixed liquid containing a resin and an organic solvent, or improved forms of these inks, which have been used conventionally for marking non-absorbent recording target materials, were used.
As the colorant, it is thought that the use of pigment-based colorants, which are difficult to disperse stably but exhibit excellent light resistance and weather resistance, is preferable to using dye-based colorants, which although exhibiting excellent dispersibility and coloring properties, tend to fade readily and have poor light resistance.

Furthermore, a variety of resins that have been used as the film-forming resin component for conventional jet printer inks, including polyester resins, vinyl chloride-vinyl acetate copolymer resins, ethylene-vinyl acetate copolymer resins, polyurethane resins, acrylic resins, styrene-acrylic resins, polyvinyl butyral resins, rosin-modified maleic acid resins, nitrocellulose and phenolic resins, have been investigated, both alone and in mixtures, in combination with the types of pigment-based colorants described above.

However, simply combining an aforementioned resin and pigment that have been used conventionally in inks for jet printers has been unable to produce, an ink that combines favorable discharge stability as a jet printer ink, with superior levels of light resistance and durability for the printed image. In particular, if a jet printer ink that has been used conventionally for forming pictures on non-absorbent members is used for an exterior wall siding material, then the ink is unable to satisfy the demanding levels of weather resistance and durability that are required, meaning the use of such inks for exterior wall applications has been impossible.
[Patent Reference1]
   Japanese Unexamined Patent Application, First Publication No. 2001-121078
[Patent Reference 2]
   Japanese Unexamined Patent Application, First Publication No. 2003-001749
[Patent Reference 3]
   Japanese Unexamined Patent Application, First Publication No. Hei 10-278497

### DISCLOSURE OF INVENTION

### PROBLEMS TO BE SOLVED BY THE INVENTION

An object of the present invention is to provide an ink for a jet printer that possesses the stable dispersibility and favorable discharge properties of a jet printer ink, and yet also exhibits favorable weather resistance, durability and light resistance when used for forming a design on a exterior wall siding material.
Moreover, another object of the present invention is to provide a production method that is capable of producing an exterior wall siding material with excellent light resistance and durability, by enabling ready formation of a decorative design even in those cases where the surface of the siding material substrate is uneven.
Yet another object of the present invention is to provide an exterior wall siding material, which is produced using the above production method, has a decorative design formed on the surface, and exhibits excellent weather resistance and durability.

### MEANS FOR SOLVING THE PROBLEMS

In order to the above objects, and develop an ink that possesses the favorable characteristics associated with jet printer inks such as favorable dispersibility and discharge properties, and yet can also be used in applications for exterior wall siding materials, which require excellent levels of light resistance, durability and weather resistance, the inventors of the present invention conducted intensive investigations to select the most appropriate film-forming resins, colorants, dispersants and solvents and the like. As a result, they discovered that a jet printer ink that uses, as the film-forming resin, an alkyd resin modified with a specific modifier, or a urethane-modified alkyd resin produced by further modifying the alkyd resin with an isocyanate, and uses a pigment-based colorant as the colorant and an organic solvent as the solvent exhibits the favorable properties of dispersibility and discharge properties required for inkjet recording, and yet when used for an exterior material such as an exterior wall siding material, yields favorable levels of light resistance, durability and weather resistance, and they were therefore able to complete the present invention.

In other words, the present invention provides an ink for a jet printer that contains a pigment, a film-forming resin, and an organic solvent, wherein the film-forming resin includes, as the main component, an oil-modified alkyd resin or fatty acid-modified alkyd resin with an oil length of 20 to 70%, that has been modified with a modifier containing one or more oils or fatty acids selected from the group consisting of castor oil, castor oil fatty acids, hydrogenated castor oil, hydrogenated castor oil fatty acids, ricinoleic acid, and 12-hydroxystearic acid.

The present invention also provides an exterior wall siding material that includes a jet ink coating layer and a surface protective layer laminated in sequence on top of a substrate for an exterior wall siding material, either directly or with an undercoat layer disposed therebetween, wherein the jet ink coating layer is formed using the ink for a jet printer described above, by applying the ink to the substrate or the undercoat layer using an inkjet method.
Moreover, the present invention also provides a method of producing an exterior wall siding material that includes the steps of forming a jet ink coating layer using an inkjet method, either directly on top of a substrate of an exterior wall siding material, or on top of an undercoat layer following formation of the undercoat layer on top of the substrate, and subsequently forming a surface protective layer across the entire surface of the jet ink coating layer, wherein the jet ink coating layer is formed using the ink for a jet printer described above.

### EFFECTS OF THE INVENTION

The ink for a jet printer according to the present invention uses a film-forming resin that includes, as the main component, an oil-modified alkyd resin or fatty acid-modified alkyd resin with an oil length of 20 to 70%, that has been modified with a modifier containing one or more oils or fatty acids selected from the group consisting of castor oil, castor oil fatty acids, hydrogenated castor oil, hydrogenated castor oil fatty acids, ricinoleic acid, and 12-hydroxystearic acid, and uses a pigment as a colorant, and as a result, retains favorable dispersibility and discharge properties, and yet enables ready printing by an inkjet method to the substrates of exterior wall siding materials such as exterior wall PCM steel sheets with uneven surfaces, and bonds strongly to the substrate or undercoat layer formed on the substrate, enabling the production of an exterior wall siding material with favorable light resistance, durability and weather resistance.

### BEST MODE FOR CARRYING OUT THE INVENTION

The ink for a jet printer according to the present invention can be produced from a pigment dispersion containing a film-forming resin, a pigment, and an organic solvent.
In the present invention, the "oil length" represents the mass fraction (%) of the fatty oil or fatty acid incorporated as structural units within the alkyd resin.
The film-forming resin used in the present invention, namely, the 20 to 70% oil-modified or fatty acid-modified alkyd resin, is modified with a modifier containing one or more oils or fatty acids selected from the group consisting of castor oil, castor oil fatty acids, hydrogenated castor oil, hydrogenated castor oil fatty acids, ricinoleic acid, and 12-hydroxystearic acid, and the modifier preferably contains a total of at least 30% by mass of the oil or fatty acid selected from the above group.
Furthermore, the oil-modified alkyd resin or fatty acid-modified alkyd resin preferably contains one or more polybasic acids selected from the group consisting of phthalic acid, phthalic anhydride and isophthalic acid as a structural unit, and the total quantity of structural units formed from polybasic acids selected from the above group is preferably at least 30 mol% of the total quantity of polybasic acid structural units.

Besides the castor oil, castor oil fatty acid, hydrogenated castor oil, hydrogenated castor oil fatty acid, ricinoleic acid or 12-hydroxystearic acid, the modifier used in the oil-modified alkyd resin or fatty acid-modified alkyd resin of the present invention may also include less than a total of 70% by mass of general-purpose oils such as palm oil, linseed oil and soybean oil, and fatty acids that represent structural units of these general-purpose oils.
The oil-modified alkyd resin or fatty acid-modified alkyd resin used in the present invention preferably includes one or more polybasic acids selected from the group consisting of phthalic acid, phthalic anhydride and isophthalic acid as a structural unit, the total quantity of structural units formed from polybasic acids selected from the above group is preferably at least 30 mol% of the total quantity of polybasic acid structural units, and 30 mol% or more of the polybasic acid structural units are even more preferably formed from phthalic anhydride or isophthalic acid.

Examples of the polybasic acids that represent structural units of the oil-modified alkyd resin or fatty acid-modified alkyd resin used in the present invention include, in addition to the phthalic acid, phthalic anhydride and isophthalic acid described above, dibasic acids having an alkyl chain such as adipic acid, azelaic acid, sebacic acid and dimer acid, unsaturated aliphatic dibasic acids such as maleic acid, fumaric acid and itaconic acid, alicyclic dibasic acids such as tetrahydrophthalic anhydride, hexahydrophthalic anhydride, methyltetrahydrophthalic anhydride, methylhexahydrophthalic anhydride, endomethylenetetrahydrophthalic anhydride and methylendomethylenetetrahydrophthalic anhydride, aromatic dibasic acids such as orthophthalic acid, isophthalic acid, terephthalic acid and methylphthalicyanhydride, and aromatic polybasic acids such as trimellitic anhydride, pyromellitic anhydride and maleicmethylcyclohexene tetrabasic acid anhydride, which may be included in a total quantity of less than 70 mol% of all the polybasic acid structural units.

There are no particular restrictions on the polyhydric alcohol that functions as a structural unit of the oil-modified alkyd resin or fatty acid-modified alkyd resin used in the present invention, and the types of polyhydric alcohols used in conventional alkyd resins, including glycerol, pentaerythritol, ethylene glycol, diethylene glycol, triethylene glycol, propylene glycol, sorbitol, mannitol and trimethylolpropane can be used.
The acid number of the oil-modified alkyd resin or fatty acid-modified alkyd resin of the above type of Structure used in the present invention is preferably within a range from 1 to 50, and is even more preferably from 5 to 30. Furthermore, the hydroxyl number is preferably within a range from 50 to 200, and is even more preferably from 70 to 150. The number average molecular weight is preferably within a range from 300 to 30,000, even more preferably from 500 to 10,000, and is most preferably from 500 to 5,000.
Examples of the above types of preferred oil-modified alkyd resins and fatty acid-modified alkyd resins, which have been modified with a modifier containing a total of at least 30% by mass of oils or fatty acids selected from the group consisting of castor oil, castor oil fatty acids, hydrogenated castor oil, hydrogenated castor oil fatty acids; ricinoleic acid, and 12-hydroxystearic acid, and in which the total quantity of structural units formed from polybasic acids selected from the group consisting of phthalic acid, phthalic anhydride and isophthalic acid is at least 30 mol% of all the polybasic acid structural units, include castor oil-modified alkyd resins such as BURNOCK D-143-65-BA (an alkyd resin with an oil length of 40%, manufactured by Dainippon Ink and Chemicals, Incorporated), BURNOCK J-517 (oil length: 24%, manufactured by Dainippon Ink and Chemicals, Incorporated) and BURNOCK 17-451 (oil length: 55%, manufactured by Dainippon Ink and Chemicals, Incorporated).

The oil-modified alkyd resin or fatty acid-modified alkyd resin used in the present invention is preferably a resin in which isocyanate groups are bonded to hydroxyl groups within the resin. In the present invention, such the oil-modified alkyd resin or fatty acid-modified alkyd resin mentioned above is deemed to also include these types of urethane-modified alkyd resins. The isocyanate-based compound is preferably bonded to the hydroxyl groups derived from the oil or fatty acid selected from the group consisting of castor oil, castor oil fatty acids, hydrogenated castor oil, hydrogenated castor oil fatty acids, ricinoleic acid and 12-hydroxystearic acid.
A urethane-modified alkyd resin used in the present invention can be obtained, for example, by partially reacting an isocyanate with the hydroxyl groups of a castor oil-modified alkyd resin.

There are no particular restrictions on the isocyanate that is reacted with the oil-modified alkyd resin or fatty acid-modified alkyd resin used in the present invention, provided it is a polyisocyanate compound, and examples include aliphatic diisocyanates such as 1,6-hexamethylene diisocyanate, alicyclic diisocyanates such as isophorone diisocyanate and hydrogenated MDI, and aromatic diisocyanates such as tolylene diisocyanates (TDI) and diphenylmethane diisocyanate (MDI). 2,4-tolylene diisocyanate, 2,6-tolylene diisocyanate, xylene diisocyanate, isophorone diisocyanate and hydrogenated MDI are particularly preferred. A urethane-modified alkyd resin can be obtained by reacting one or more of the above isocyanates with the aforementioned oil-modified alkyd resin or fatty acid-modified alkyd resin.

Using this type of oil-modified alkyd resin or fatty acid-modified alkyd resin of the present invention, for example a urethane-modified alkyd resin prepared by reacting a castor oil-modified alkyd resin with a diisocyanate, as the film-forming component of an ink for a jet printer is preferred as it improves the wetting properties between the pigment and the resin within the ink, and also improves the dispersion stability of the pigment.
The urethane-modified alkyd resin can be obtained by reacting from 0.02 to 0.3 mols of a diisocyanate for each hydroxyl group equivalent within the oil-modified alkyd resin or fatty acid-modified alkyd resin of the present invention such as the aforementioned castor oil-modified alkyd resin, and a particularly preferred urethane-modified alkyd resin can be obtained, for example, by reacting from 0.03 to 0.15 mols of a diisocyanate for each hydroxyl group equivalent of a castor oil-modified alkyd resin.

Specific examples of the oil-modified alkyd resins or fatty acid-modified alkyd resins of the present invention, or the urethane-modified alkyd resins of such alkyd resins, include castor oil-modified alkyd resins and castor oil-modified alkyd resins that have been subjected to isocyanate modification, and inks for jet printers prepared using these resins exhibit favorable adhesion between the substrate or undercoat layer formed on the substrate and the ink, and between the ink and the surface protective layer formed as an overcoat. The pigment dispersibility, and the boiling water resistance, which indicates the durability of the printed image within boiling water, are particularly favorable, and the specific oil-modified alkyd resins or fatty acid-modified alkyd resins of the present invention that have been subjected to further modification with an isocyanate enable a particularly favorable balance to be maintained between the pigment dispersibility, and the adhesion to the undercoat layer and the protective layer, which incorporates the boiling water resistance.
Other resins such as acrylic resins, saturated polyester resins, unsaturated polyester resins and urethane resins may also be mixed into the ink as addition film-forming resins, provided they are compatible with the aforementioned alkyd resin and do not impair the effects of the jet printer ink of the present invention. However, in terms of achieving the main effects of the present invention of weather resistance and durability, the use of oil-modified alkyd resins or fatty acid-modified alkyd resins that have not been mixed with other resins is preferred.

The colorants generally used in jet printer inks include dyes, organic pigments and inorganic pigments, but because a jet printer ink used for an exterior wall siding material requires high levels of light resistance, durability and weather resistance, an inorganic pigment is preferred.
Specific examples include carbon blacks such as furnace black, channel black, thermal black and acetylene black, as well as black iron oxide, yellow iron oxide, red iron oxide, ultramarine, iron blue and titanium oxide (both rutile and anatase). Furthermore, in the case of organic pigments, the use of phthalocyanine-based pigments, which exhibit powerful light resistance, is preferred.

In order to disperse these pigments, conventional dispersants such as anionic, cationic and nonionic dispersants, polymer dispersants, fluorine-based compounds and other amphoteric compounds, or conventional dispersion assistants such as pigment derivatives may be selected in accordance with the properties of the pigment and used in addition to the above film-forming resin, and dispersion can be conducted using a conventional dispersion device.

There are no particular restrictions on the solvent medium that is mixed with the above pigment and resin to form a dispersion, and examples include alcohol-based solvents such as ethyl alcohol and isopropyl alcohol, glycol-based solvents such as ethylene glycol monoethyl ether and propylene glycol monomethyl ether, ester-based solvents such as ethyl acetate, butyl acetate, 3-methoxybutyl acetate, 3-methoxy-3-methylbutyl acetate and propylene glycol monomethyl ether acetate, and hydrocarbon-based solvents such as n-hexane, isooctane, n-octane, methylcyclohexane, cyclopentane, toluene and xylene.
These solvents may be used either alone, or in combinations of two or more different solvents, and a solvent composition can be designed that enables the viscosity, surface tension and drying rate of the jet printer ink to be regulated to best suit the substrate being printed and the jet printer being used.

In a sample method of producing a jet printer ink of the present invention from the raw materials described above, a mixture that includes the pigment, the organic solvent, and if necessary a dispersant, is first mixed using a stirrr, thus preparing a pigment mixed liquid. Subsequently, the pigment within the pigment mixed liquid is ground finely and dispersed within the organic solvent using a dispersion device such as a ball mill, attritor, sand mill or beads mill, thereby forming a pigment dispersion that functions as a pigment base for the ink. The oil-modified alkyd resin or fatty acid-modified alkyd resin of the specific structure used in the present invention, or the urethane-modified alkyd resin obtained by modifying these resins with an isocyanate (for example, a castor oil-modified alkyd resin, or a urethane-modified alkyd resin prepared by modifying a castor oil-modified alkyd resin with an isocyanate), and an organic solvent are then added to the prepared ink pigment base, and mixing is conducted using a dispersion stirrer. Subsequently, the viscosity is regulated using an organic solvent, and the dispersion is filtered through a 1 micron filter, yielding an ink for a jet printer that can be used for forming pictures on exterior wall siding materials.

Other components that may be added to the ink besides the components described above include extender pigments such as silica powder, aluminum silicate and calcium carbonate, which are added to improve the covering properties, and other additives such as pigment precipitation prevention agents, and thickeners that are used for regulating the ink viscosity.

In order to produce an exterior wall siding material of the present invention, a jet ink coating layer can be formed directly on the substrate of the siding material, but in order to better cover the color of the substrate to ensure more favorable coloring of the picture, and improve the adhesion of the jet ink coating layer, an undercoat layer is preferably first formed over the entire surface of the siding material substrate, with the jet printer ink then used to form the jet ink coating layer using an inkjet recording method. Subsequently, a surface protective layer is formed on top of the jet ink coating layer to complete the production of the exterior wall metal siding material.

Examples of materials that can be used as the siding material substrate include ceramic-based substrates such as cement slate sheets and calcium silicate sheets, plywood and timber, metal sheets of aluminum and steel and the like, and sheets with uneven surfaces such as brick patterns, tile patterns or wood grain patterns, produced by subjecting the above metal sheets to embossing or drawing processing. Particularly in those cases where a metal siding material substrate is used, the surface temperature is prone to reaching high temperatures upon exposure to the external environment, meaning the jet ink coating layer requires particularly high levels of durability and weather resistance, and consequently the jet printer ink of the present invention is extremely useful.

The undercoat layer can be produced by applying a coating material, containing a urethane resin, a polyvinyl alcohol resin, an acrylic resin, a hydroxymethylcellulose resin, an acrylic resin or a polyamide resin or the like and a solvent, to the siding material substrate using a sprayer or any of the various coaters, and then performing drying to generate a coating film on the top of the surface.
A substrate that has already been coated with any of a variety of resins as an undercoat layer, such as a PCM steel sheet, can be used as the metal siding material substrate.

Examples of specific PCM coated sheets that can be used in the present invention include sheets prepared by forming a resin coating on a metal sheet formed from steel plate, titanium, copper, magnesium or aluminum and the like, or a metal-coated sheet in which another metal is used to coat one of the above metal sheets. Here, examples of metal-coated sheets include metal sprayed steel sheets and metal plated steel sheets. Plating materials with an inorganic substance or organic substance dispersed within the metal, or metal sheet coatings formed by metal spraying are included within the aforementioned metal-coated sheets. Of the above metal materials, particularly favorable materials include metal materials coated with zinc, an alloy of zinc and another metal, or a zinc compound, steel sheets that have been subjected to zinc metal spraying or plating, steel sheet materials prepared by subjecting the above steel sheets to a treatment that forms an inorganic coating such as a chromate treatment or zinc phosphate treatment, as well as the 55% aluminum alloy GALVANIUM, and the 5% aluminum alloy GALFAN. Moreover, PCM coated sheets formed by precoating these metal sheets or metal-coated sheets with a resin composition containing an isophthalic acid-based polyester resin / melamine resin, PCM coated sheets formed by precoating these metal sheets or metal-coated sheets with a resin composition containing a vinylidene fluoride resin / acrylic resin / melamine resin / bisphenol A epoxy resin, and PCM coated sheets formed by precoating these metal sheets or metal-coated sheets with a resin composition containing a terephthalic acid-based polyester resin / melamine resin / bisphenol A epoxy resin can also be used.
Furthermore, in order to impart sound insulating properties and/or heat insulating properties, the rear surface of the PCM coated sheet may be formed using a rear surface material such as a foamed resin body of a phenolic resin or polyurethane resin or the like, or an aluminum laminated craft paper that uses an inorganic material such as a plaster board as the core material.

A design is printed onto the undercoat layer formed in this manner, using the ink for a jet printer according to the present invention, thereby forming a jet ink coating layer.
Examples of the clear coating material used for forming the surface protective layer that functions as an overcoat on top of the jet ink coating layer include aqueous systems such as silicon acrylic emulsion-based and acrylic emulsion-based coating agents, and organic solvent systems such as acrylic-based, acrylic urethane-based and fluorine-based coating agents, and these coating agents may be coated onto the top of the dried jet ink coating layer using a sprayer or any of the various coaters.

### EXAMPLES

As follows is a more detailed description of the present invention based on a series of examples. However, the present invention is in no way limited by the examples presented below, and for example, different structural elements from the examples may be appropriately combined. The units "parts" in the following examples refer to "parts by mass".

### (Example 1)

### <Synthesis of a Castor Oil-modified, Urethane-modified Alkyd Resin>

A reaction vessel fitted with a stirrer, a condenser, and a nitrogen inlet tube was charged with:
165 parts of BURNOCK D-143-65-BA
(a castor oil-modified alkyd resin manufactured by Dainippon Ink and Chemicals, Incorporated, oil length: 40%, solvent medium: n-butyl acetate solution, non-volatile fraction: 65%, solid fraction acid number: 9.7, solid fraction hydroxyl number: 95) and
38.7 parts of 3-methoxybutyl acetate (MBA) (manufactured by Daicel Chemical Industries, Ltd.),
   and following stirring for 15 minutes,
1.5 parts of TDI-80/20 and
0.02 parts of dibutyltin laurate
   were added, the temperature was raised to 95°C, and the temperature was held at 95°C for 3 to 4 hours, thus yielding a castor oil-modified, urethane-modified alkyd resin <UAL-1> with an NCO% of 0.01%.

### <Measurement of Physical Properties of Alkyd Resin>

Measurement of the physical properties of the produced castor oil-modified, urethane-modified alkyd resin was conducted under the conditions described below.
Gardner viscosity: the value measured at 25°C using a Gardner bubble viscometer.
Resin external appearance: evaluated visually under indoor lighting.
Non-volatile fraction: the resin was dried for 30 minutes at 170°C in a blast oven, the weight was measured before and after drying, and the non-volatile fraction was then calculated from the measured values.
The results revealed the properties shown below for the resin <UAL-1> (the castor oil-modified, methane-modified alkyd resin).
Gardner viscosity (25°C): M
Resin external appearance: faint yellow color with no turbidity
Non-volatile fraction: 49.6%

An ink composition for a jet printer was prepared using the castor oil-modified, urethane-modified alkyd resin (UAL-1) obtained above. A pigment dispersion base was first prepared using a pigment, a dispersant and an organic solvent, and the resin and an organic solvent were then added to the pigment dispersion base, and the viscosity was regulated to complete preparation of the ink.

### <Preparation of Pigment Dispersion Base for Magenta Ink>

34.0 parts of 100ED (a magenta pigment, manufactured by Toda Pigment Corp.)
16.0 parts of BURNOCK D-143-65-BA (a castor oil-modified alkyd resin manufactured by Dainippon Ink and Chemicals, Incorporated, used as a dispersant, data of properties as described above)
50.0 parts of propylene glycol monomethyl ether acetate (PMA) (manufactured by Kyowa Hakko Chemical Co., Ltd.)
The above compounds were first dispersed uniformly using a dispersion stirrer, and a nano-mill was then used to finely grind the compounds and effect dispersion within the organic solvent, thus forming a magenta ink pigment dispersion base.

### <Preparation of Jet Printer Ink A>

A jet printer ink A was obtained using the formulation shown below.
13.0 parts of the above magenta ink pigment dispersion base
36.0 parts of UAL-1 (the castor oil-modified, urethane-modified alkyd resin (includes a solvent fraction))
51.0 parts of 3-methoxybutyl acetate (manufactured by Daicel Chemical Industries, Ltd.)
A mixture was prepared with the above formulation, and following stirring using a dispersion stirrer, the mixture was filtered through a 1 micron filter, yielding a jet printer ink A.
The overall blend ratio of the solid fraction within the jet printer ink A is shown below.
4.4 parts of 100ED (the pigment)
1.3 parts (non-volatile fraction) of BURNOCK D-143-65-BA (used as a dispersant)
18.0 parts (non-volatile fraction) of UAL-1 (the castor oil-modified, urethane-modified alkyd resin)
The solid fraction is as shown above, and the liquid fraction is shown below.
6.5 parts of propylene glycol monomethyl ether acetate
58.2 parts of 3-methoxybutyl acetate
11.6 parts of butyl acetate

### (Example 2)

### <Preparation of Pigment Base for Yellow Ink>

37.0 parts of TSY-1 (a yellow pigment, manufactured by Toda Pigment Corp.)
27.8 parts of SOLSPERSE 37500 (a dispersant manufactured by The Lubrizol Corporation, a butyl acetate solution with a non-volatile fraction of 40%)
35.2 parts of propylene glycol monomethyl ether acetate (manufactured by Kyowa Hakko Chemical Co., Ltd.)
The above compounds were first dispersed uniformly using a dispersion stirrer, and a nano-mill was then used to grind the compounds to a very fine particle size and effect dispersion within the organic solvent, thus forming a yellow ink pigment base.

### <Preparation of Jet Printer Ink B>

The castor oil-based, urethane-modified alkyd resin UAL-1 and methoxybutyl acetate were added to the yellow ink pigment base using the formulation shown below, and following stirring using a dispersion stirrer, the mixture was filtered through a 1 micron filter, yielding a jet printer ink B.
12.0 parts of the above yellow ink pigment base
35.0 parts of UAL-1 (includes a solvent fraction)
53.0 parts of 3-methoxybutyl acetate

The overall blend ratio of the solid fraction within the jet printer ink B is shown below.
4.4 parts of TSY-1 (the pigment)
1.3 parts (non-volatile fraction) of SOLSPERSE 37500 (the dispersant)
17.5 parts (non-volatile fraction) of UAL-1 (the castor oil-based, urethane-modified alkyd resin)
The above represents the solid fraction.
4.3 parts of propylene glycol monomethyl ether acetate
60.0 parts of methoxybutyl acetate
12.5 pans of butyl acetate
The above represents the solvent medium.

### (Example 3)

### <Preparation of Pigment Base for Cyan Ink>

25.8 parts of FASTOGEN BLUE 5430SD (a blue pigment, manufactured by Dainippon Ink and Chemicals, Incorporated)
7.7 parts of AJISPER PB821 (a dispersant manufactured by Ajinomoto-Fine-Techno Co., Inc.)
66.5 parts of propylene glycol monomethyl ether acetate
The above compounds were first dispersed uniformly using a dispersion stirrer, and a nano-mill was then used to grind the compounds to a very fine particle size and effect dispersion within the organic solvent, thus forming a cyan ink pigment base.

### <Preparation of Jet Printer InkC>

BURNOCK D-143-65-BA (a castor oil-modified alkyd resin, manufactured by Dainippon Ink and Chemicals, Incorporated), propylene glycol monomethyl ether acetate and methoxybutyl acetate were added to the cyan ink pigment base using the formulation shown below, and following stirring using a dispersion stirrer, the mixture was filtered through a 1 micron filter, yielding a jet printer ink C.
17.1 parts of the above cyan ink pigment base
23.1 parts of D-143-65-BA
5.0 parts of propylene glycol monomethyl ether acetate
54.8 parts of 3-methoxybutyl acetate

The formulation of the solid fraction within the ink composition C is shown below.
4.4 parts of 5430SD (the cyan pigment)
1.3 parts (non-volatile fraction) of PB821 (the dispersant)
15.0 parts (non-volatile fraction) of D-143-65-BA (the castor oil-modified alkyd resin)
The above represents the solid fraction.
16.4 parts of propylene glycol monomethyl ether acetate
54.8 parts of MBA
8.1 parts of butyl acetate
The above represents the solvent medium.

### (Example 4)

### <Preparation of Pigment Base for Black Ink>

A pigment dispersion base was first prepared using a pigment, a dispersant and an organic solvent, and a resin and an organic solvent were then added to the base and the viscosity was regulated to complete preparation of the ink.
16.7 parts of Mitsubishi Carbon Black #960 (a carbon black, manufactured by Mitsubishi Chemical Corporation)
10.0 parts of AJISPER PB821 (a dispersant manufactured by Ajinomoto-Fine-Techno Co., Inc.)
73.3 parts of propylene glycol monomethyl ether acetate (manufactured by Kyowa Hakko Chemical Co., Ltd.)
The above compounds were first dispersed uniformly using a dispersion stirrer, and a nano-mill was then used to finely grind the compounds and effect dispersion within the organic solvent, thus forming a black ink pigment base.

### <Preparation of Jet Printer Ink D>

BURNOCK J-157 (a castor oil-modified alkyd resin, manufactured by Dainippon Ink and Chemicals, Incorporated, oil length: 24%, non-volatile fraction: 70%, solvent medium: ethyl acetate, acid number: not more than 10, hydroxyl number: 120 to 150, number average molecular weight: 2070), propylene glycol monomethyl ether acetate (PMA) and 3-methoxybutyl acetate (MBA) were added to the black ink pigment base using the formulation shown below, and following stirring using a dispersion stirrer, the mixture was filtered through a 1 micron filter, yielding a jet printer ink D.
26.4 parts of the above pigment base
16.4 parts of BURNOCK J-157 (manufactured by Dainippon Ink and Chemicals, Incorporated, includes a solvent fraction)
5.0 parts of propylene glycol monomethyl ether acetate
52.2 parts of 3-methoxybutyl acetate

The formulation of the solid fraction within the above ink D is shown below.
4.4 parts of Mitsubishi Carbon Black #960 (the black pigment)
2.6 parts of PB821 (the dispersant)
11.5 parts of BURNOCK J-157 (the castor oil-modified alkyd resin)
The above represents the solid fraction.
24.4 parts of propylene glycol monomethyl ether acetate
52.2 parts of methoxybutyl acetate
4.9 parts of ethyl acetate
The above represents the solvent medium.
A jet printer ink was prepared in the same manner as the example 1, yielding the ink D.

### (Example 5)

### <Preparation of Jet Printer Ink E>

Using BURNOCK 17-451 (a castor oil-modified alkyd resin, manufactured by Dainippon Ink and Chemicals, Incorporated, oil length 55%, non-volatile fraction: 65%, solvent medium: xylene and butyl acetate, solid fraction acid number: 13, solid fraction hydroxyl number: 115, number average molecular weight: 840) and the magenta ink pigment base described above, a jet printer ink was prepared so as to have a final formulation shown below.
4.4 parts of 100ED (the magenta pigment)
1.3 parts (non-volatile fraction) of BURNOCK D-143-65-BA (used as a dispersant)
18.0 parts (non-volatile fraction) of BURNOCK 17-451 (the castor oil-modified, alkyd resin, manufactured by Dainippon Ink and Chemicals, Incorporated)
The above represents the solid fraction.
12.2 parts of propylene glycol monomethyl ether acetate
53.8 parts of methoxybutyl acetate
4.8 parts of xylene
5.5 parts of butyl acetate
The above represents the solvent medium.

### (Comparative Example 1)

### <Preparation of Jet Printer Ink F>

Using a palm oil-modified alkyd resin BURNOCK D-119-65BA (a palm oil-modified alkyd resin, manufactured by Dainippon Ink and Chemicals, Incorporated, oil length: 34%, non-volatile fraction: 65%, solvent medium: butyl acetate, solid fraction acid number: 11, hydroxyl number: 108, number average molecular weight: 2,500) and the magenta ink pigment base described above, a jet printer ink F was prepared so as to have a final formulation shown below.
4.4 parts of 100ED (the magenta pigment)
1.3 parts (non-volatile fraction) of BURNOCK D-143-65-BA (used as a dispersant)
18.0 parts (non-volatile fraction) of BURNOCK D-119 (the palm oil-modified, alkyd resin, manufactured by Dainippon Ink and Chemicals, Incorporated)
The above represents the solid fraction.
12.1 parts of propylene glycol monomethyl ether acetate
53.8 parts of methoxybutyl acetate
10.4 parts of butyl acetate
The above represents the solvent medium.
A jet printer ink was prepared in the same manner as the example 1, yielding the ink F.

### (Comparative Example 2)

### <Preparation of Jet Printer Ink G>

Using a MMA-based acrylic resin and the magenta ink pigment base described above, a jet printer ink G was prepared so as to have a final formulation shown below.
4.4 parts of 100ED (the magenta pigment, manufactured by Toda Pigment Corp.)
1.3 parts (non-volatile fraction) of BURNOCK D-143-65-BA (used as a dispersant)
18.0 parts of BR87 (an MMA-based acrylic resin manufactured by Mitsubishi Rayon Co., Ltd., acid number: 10.5, molecular weight: 25,000)
The above represents the solid fraction.
21.8 parts of propylene glycol monomethyl ether acetate
53.8 parts of methoxybutyl acetate
0.7 parts of butyl acetate
The above represents the solvent medium.
A jet printer ink was prepared in the same manner as the example 1, yielding the ink G.

### (Comparative Example 3)

### <Preparation of Jet Printer Ink H>

Using a MMA-based acrylic resin and the cyan ink pigment base described above, a jet printer ink H was prepared so as to have a final formulation shown below.
4.4 parts of FASTOGEN BLUE 5430SD (a blue pigment, manufactured by Dainippon Ink and Chemicals, Incorporated)
1.3 parts of PB821 (the dispersant)
13.5 parts of BR113 (an MMA-based acrylic resin manufactured by Mitsubishi Rayon Co., Ltd., acid number: 3.5, molecular weight: 30,000)
The above represents the solid fraction.
17.4 parts of propylene glycol monomethyl ether acetate
63.4 parts of methoxybutyl acetate
The above represents the solvent medium.
A jet printer ink was prepared in the same manner as the example 1, yielding the ink H.

### (Comparative Example 4)

### <Preparation of Jet Printer Ink I>

Using a vinyl chloride-vinyl acetate resin and the black ink pigment base described above, a jet printer ink I was prepared so as to have a final formulation shown below.
4.4 parts of Mitsubishi Carbon Black #960 (the black pigment)
2.6 parts of PB821 (the dispersant)
11.5 parts of VROH (a vinyl chloride-vinyl acetate resin manufactured by The Dow Chemical Company, molecular weight: 8,000)
The above represents the solid fraction.
24.3 parts of propylene glycol monomethyl ether acetate
57.2 parts of methoxybutyl acetate
The above represents the solvent medium.
A jet printer ink was prepared in the same manner as the example 1, yielding the ink I.

The properties listed below were measured for each of the inks prepared in the above examples 1 to 5 and comparative examples 1 to 4.
Viscosity (mPa·s): measured at a liquid temperature of 25°C using an E-type viscometer.
Surface tension (mN/m): measured using a Wilhelmi surface tension meter (A-3, a CBVP surface tension meter manufactured by Kyowa Interface Science Co., Ltd.).
Average particle size (nm): measured using a laser diffraction scattering particle size analyzer (NANOTRAC UPA-150EX, manufactured by Nikkiso Co., Ltd.).
The ink composition and ink properties for each of the examples and comparative examples are summarized in Table 1.

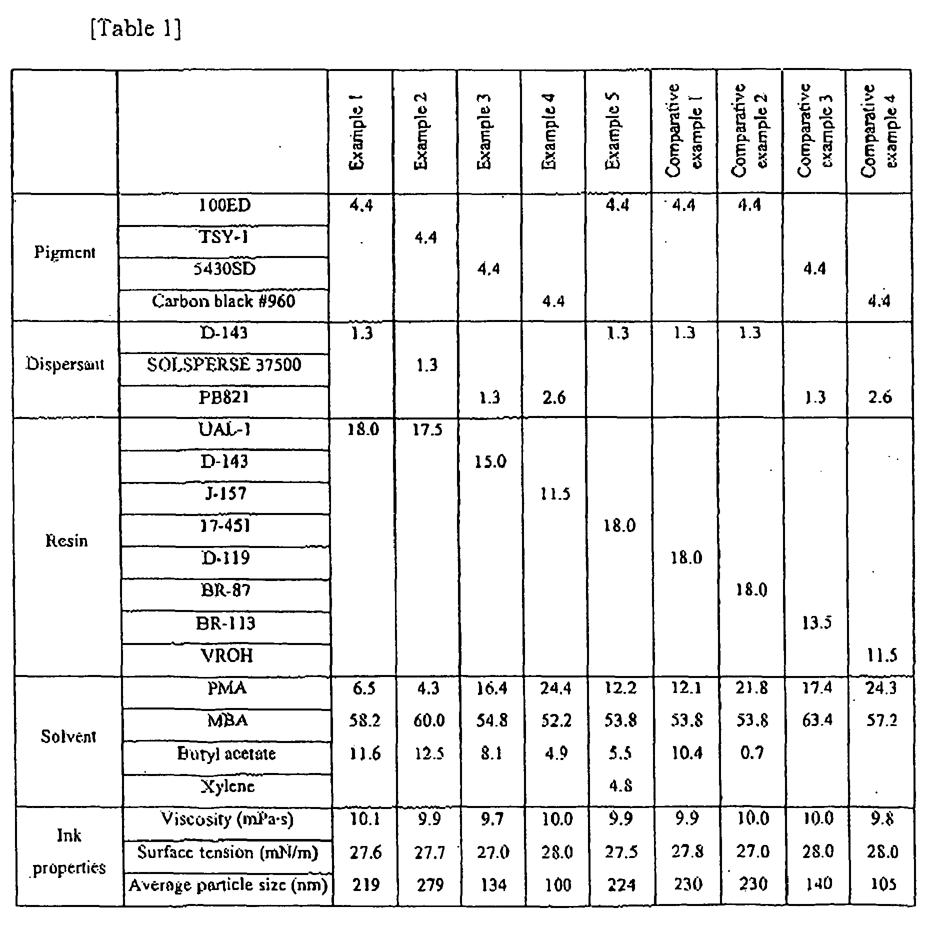

100ED: a magenta pigment, manufactured by Toda Pigment Corp.
TSY-1: a yellow pigment, manufactured by Toda Pigment Corp.
FASTGEN BLUE 5430SD: a blue pigment, manufactured by Dainippon Ink and Chemicals, Incorporated
Carbon black #960: a carbon black manufactured by Mitsubishi Chemical Corporation
D-143-65-BA: a castor oil-modified alkyd resin, manufactured by Dainippon Ink and Chemicals, Incorporated
SOLSPERSE 37500: a dispersant manufactured by The Lubrizol Corporation
PB821: a dispersant manufactured by Ajinomoto-Fine-Techno Co., Inc.
UAL-1: a castor oil-modified, urethane-modified alkyd resin
BURNOCK J-517: a castor oil-modified alkyd resin manufactured by Dainippon Ink and Chemicals, Incorporated
BURNOCK 17-451: a castor oil-modified alkyd resin manufactured by Dainippon Ink and Chemicals, Incorporated
BURNOCK D-119-65BA: a palm oil-modified alkyd resin manufactured by Dainippon Ink and Chemicals, Incorporated
BR-87: a MMA-based acrylic resin manufactured by Mitsubishi Rayon Co., Ltd.
BR-113: a MMA-based acrylic resin manufactured by Mitsubishi Rayon Co., Ltd.
VROH: a vinyl chloride-vinyl acetate resin manufactured by The Dow Chemical Company
PMA: propylene glycol monomethyl ether acetate
MBA: methoxybutyl acetate

The 9 jet printer inks from the examples or the comparative examples, namely the jet printer inks A and B prepared using the castor oil-modified alkyd resin <UAL-1>, the jet printer inks C, D and E prepared using the castor oil-modified alkyd resins BURNOCK D-143, BURNOCK J-517 and BURNOCK 17-451 respectively, the jet printer ink F prepared with using the palm oil-modified alkyd resin and without using the castor oil-modified alkyd resin, the jet printer inks G and H prepared using commercially available acrylic resins, and the jet printer ink I prepared using the vinyl chloride-vinyl acetate resin were each printed on to the surface of a PCM steel sheet, a surface protective layer was formed thereon with a clear coating, and in order to evaluate whether or not the resulting coated steel sheet could be used for exterior wall applications, the sheet was subjected to a cross hatch adhesion test, a coin scratch test, a pencil strength test, and a boiling water resistance test (for 1 hour or 5 hours at 80°C)

GALFAN steel sheets manufactured by Nippon Fine Coatings, Inc. were used as the PCM steel sheets, and the test samples were prepared by applying each of the jet printer inks A to I to the top of a PCM steel sheet, and subsequently applying a clear top coat of GEOTECH ES-TC (a water-based silicon acrylic emulsion, manufactured by Dainippon Ink and Chemicals, Incorporated).
The test methods are described below.

### <Cross Hatch Adhesion Test>

The cross hatch adhesion test was conducted in accordance with JIS K5600-5-6. Two sets of ten orthogonally intersecting cuts were inserted in the test sample at 2 mm intervals, an adhesive tape was bonded to the surface so as to cover all of the cut intersections, and the adhesive tape was then peeled off. Of the 100 cut intersections, the number of intersections at which peeling did not occur was counted, and those sheets for which peeling did not occur at 80 or more of the 100 intersections were deemed to have passed the test.

### <Coin Scratch Test>

Using an old 500 yen coin (without the perimeter notches), the coating film of the test sample was scratched with the coin under a loading of 500 g and at a speed of 3 m/minute, and the level of scratching of the film was evaluated using a 5-point scale.
Evaluation:
5 (good, no change)
4 (fine scratches are visible on the film)
3 (the film scratches, but does not detach)
2 (the film does not detach, but the underlying material is visible)
1 (poor, the film detaches, revealing the underlying material)
A result of 3 or above was regarded as a pass.

### <Pencil Hardness>

A scratch hardness test was conducted in accordance with JIS K5600-5-4. A result of H or harder was regarded as a pass.

### <Boiling Water Resistance Test>

The test piece was suspended in hot water for 10 minutes in accordance with JIS K5400-8-20, and was then removed from the water and subjected to the following tests
1. External appearance the state of external appearance anomalies such as the occurrence of blisters on the film surface of the test sample was evaluated using a 5-point scale from 5 to 1. With reference to the evaluation of film degradation described in JIS K5600-8-2, and the classification of swelling (a 5-point scale), the evaluation was conducted by awarding a score from 1 for severely degraded samples through to 5 for samples that showed no change. In order to ensure no external appearance anomalies, any score other than 5 was regarded as a fail. (Note, in this evaluation, the order of ranking from 1 to 5 is opposite to that used in JIS K5600-8-2.)
2. Gloss Variation: Using a gloss meter (VG2000, manufactured by Nippon Denshoku Industries Co., Ltd.), the gloss of the sample was measured before and after the test, and the gloss reduction ratio following testing was determined using the value of the expression: (gloss after test / gloss before test) x 100. A result of 80% or above was regarded as a pass.
3. Cross Hatch Adhesion:
   A cross hatch adhesion test was conducted in accordance with JIS K5600-5-6. Two sets of ten orthogonally intersecting cuts were inserted at 2 mm intervals in the sample that had undergone the boiling water resistance test, and of the 100 cut intersections, the number of intersections at which peeling did not occur was counted. A value of 80/100 or more was regarded as a pass.

The results of the above tests are shown below in Table 2 and Table 3.

**[Table 2]**

| | Cross hatch adhesion | Coin scratch | Pencil strength |
|---|---|---|---|
| Example 1 | 100/100 | 5 | H |
| Example 2 | 100/100 | 5 | H |
| Example 3 | 100/100 | 5 | H |
| Example 4 | 100/100 | 5 | H |
| Example 5 | 100/100 | 5 | H |
| Comparative example 1 | 90/100 | 4 | F |
| Comparative example 2 | 100/100 | 4 | F |
| Comparative example 3 | 100/100 | 4 | F |
| Comparative example 4 | 100/100 | 5 | H |

**[Table 3]**

| | Boiling water resistance (80°C, 1 hour) | | | Boiling water resistance (80°C, 5 hours) | | |
|---|---|---|---|---|---|---|
| | External appearance | Gloss variation (%) | Cross hatch test | External appearance | Gloss variation (%) | Cross hatch test |
| Example 1 | 5 | 103 | 100/100 | 5 | 102 | 100/100 |
| Example 2 | 5 | 99 | 100/100 | 5 | 97 | 100/100 |
| Example 3 | 5 | 115 | 98/100 | 5 | 123 | 95/100 |
| Example 4 | 5 | 90 | 100/100 | 5 | 88 | 90/100 |
| Example 5 | 5 | 110 | 100/100 | 5 | 115 | 95/100 |
| Comparative example 1 | 4 | 70 | 80/100 | 2 | 60 | 60/100 |
| Comparative example 2 | 3 | 80 | 80/100 | 2 | 60 | 55/100 |
| Comparative example 3 | 4 | 70 | 85/100 | 3 | 60 | 60/100 |
| Comparative example 4 | 3 | 70 | 80/100 | 2 | 50 | 50/100 |

The jet printer inks that used a castor oil-modified alkyd resin or a castor oil-modified, urethane-modified alkyd resin produced by reacting a castor oil-modified alkyd resin with a diisocyanate exhibited superior levels of adhesion and boiling water resistance to the inks that used other resins

### <Weather Resistance Test>

Using samples prepared by applying each of the jet printer inks A, B, C, D and E that passed the boiling water test described above to a PCM steel sheet in the same manner as described above, and subsequently applying a clear top coat of GEOTEC ES-TC (a water-based silicon acrylic emulsion, manufactured by Dainippon Ink and Chemicals, Incorporated), evaluations of the weather resistance were performed by conducting 100, 300 and 500 hour tests using a Super UV Weather Resistance Tester
Apparatus: EYE Super UV Tester, manufactured by Iwasaki Electric Co., Ltd.
Evaluation Items:
1. External appearance: must have no blisters.
2. Gloss Variation: a gloss level following testing that is at least 80% of the gloss prior to testing is regarded as a pass.

**[Table 4]**

| | S-UV 100 hours | | S-UV 300 hours | | S-UV 500 hours | |
|---|---|---|---|---|---|---|
| | External appearance | Gloss variation (%) | External appearance | Gloss variation (%) | External appearance: | Gloss variation (%) |
| Example 1 | No anomalies | 100 | No anomalies | 102 | No anomalies | 99 |
| Example 2 | No anomalies | 98 | No anomalies | 110 | No anomalies | 105 |
| Example 3 | No anomalies | 94 | No anomalies | 89 | No anomalies | 80 |
| Example 4 | No anomalies | 95 | No anomalies | 98 | No anomalies | 98 |
| Example 5 | No anomalies | 94 | No anomalies | 89 | No anomalies | 90 |

In the accelerated tests using Super-UV, it is claimed that 50 hours is approximately equivalent to exposure outdoors for one year, so that 500 hours is equivalent to 10 years, and consequently it can be concluded that if used outdoors as a siding material, all of the samples A, B, C, D and E will exhibit no change in external appearance after approximately 10 years.

### INDUSTRIAL APPLICABILITY

An ink for a jet printer according to the present invention uses a film-forming resin that includes, as the main component, an oil-modified alkyd resin or fatty acid-modified alkyd resin with an oil length of 20 to 70%, that has been modified with a modifier containing one or more oils or fatty acids selected from the group consisting of castor oil, castor oil fatty acids, hydrogenated castor oil, hydrogenated castor oil fatty acids, ricinoleic acid, and 12-hydroxystearic acid, and also uses a pigment as a colorant, and as a result, retains favorable dispersibility and discharge properties, and yet enables ready printing by an inkjet method to the substrates of exterior wall siding materials such as exterior wall PCM steel sheets with uneven surfaces, and bonds strongly to the substrate or undercoat layer formed on the substrate, enabling the production of an exterior wall siding material with favorable light resistance, durability and weather resistance.
Furthermore, according to a method of producing an exterior wall siding material of the present invention, an undercoat layer is formed over the entire surface of the siding material substrate, a jet printer ink with the composition described above is used to form a jet ink coating layer at arbitrary locations on top of the undercoat layer, and a surface protective layer is then formed across the entire surface, and as a result, a highly decorative exterior wall siding material that has a detailed design formed thereon and exhibits excellent durability and light resistance can be provided, which has a great deal of industrial significance.

## Claims

1. An ink for a jet printer, comprising a pigment, a film-forming resin, and an organic solvent, wherein said film-forming resin comprises, as a main component, an oil-modified alkyd resin or fatty acid-modified alkyd resin with an oil length of 20 to 70%, that has been modified with a modifier comprising one or more oils or fatty acids selected from the group consisting of castor oil, castor oil fatty acids, hydrogenated castor oil, hydrogenated castor oil fatty acids, ricinoleic acid, and 12-hydroxystearic acid, the acid number of the oil-modified alkyd resin or the fatty acid-modified alkyd resin is within a range from 1 to 50, and
the hydroxyl number of the oil-modified alkyd resin or the fatty acid-modified alkyd resin is within a range from 50 to 200.

2. The ink for a jet printer according to claim 1, wherein a total quantity of oils or fatty acids of said group consisting of castor oil, castor oil fatty acids, hydrogenated castor oil, hydrogenated castor oil fatty acids, ricinoleic acid, and 12-hydroxystearic acid represents 30% by mass or more of said modifier.

3. The ink for a jet printer according to claim 2, wherein said oil-modified alkyd resin or fatty acid-modified alkyd resin comprises one or more polybasic acids selected from the group consisting of phthalic acid, phthalic anhydride and isophthalic acid as a structural unit, and a total quantity of structural units formed from polybasic acids of said group represents 30 mol% or more of all polybasic acid structural units.

4. The ink for a jet printer according to claim 1, wherein said oil-modified alkyd resin or fatty acid-modified alkyd resin is a urethane-modified alkyd resin in which an isocyanate is bonded to hydroxyl groups within said resin.

5. The ink for a jet printer according to either one of claim 1 and claim 4, wherein said ink is used for printing a design of an exterior wall siding material.

6. An exterior wall siding material, comprising a jet ink coating layer and a surface protective layer laminated in sequence on top of a substrate of an exterior wall siding material, either directly or with an undercoat layer disposed therebetween, wherein said jet ink coating layer is formed using an ink for a jet printer according to claim 5, by applying said ink to said substrate or said undercoat layer using an inkjet method.

7. A method of producing an exterior wall siding material, comprising: forming a jet ink coating layer, using an inkjet method, either directly on top of a substrate of an exterior wall siding material, or on top of an undercoat layer following formation of said undercoat layer on top of said substrate, and subsequently forming a surface protective layer across an entire surface of said jet ink coating layer, wherein said jet ink coating layer is formed using an ink for a jet printer according to claim 5.

## Patentansprüche

1. Tinte für einen Strahldrucker, umfassend ein Pigment, ein filmbildendes Harz und ein organisches Lösungsmittel, wobei das filmbildende Harz als Hauptkomponente ein ölmodifiziertes Alkydharz oder fettsäuremodifiziertes Alkydharz mit einer Öllänge von 20 bis 70% umfasst, das mit einem Modifikator modifiziert worden ist, umfassend ein oder mehrere Öl(e) oder Fettsäure(n), ausgewählt aus der Gruppe, bestehend aus Castoröl, Castoröl-Fettsäuren, hydriertem Castoröl, hydrierten Castoröl-Fettsäuren, Rizinusölsäure sowie 12-Hydroxystearinsäure, wobei die Säurezahl des ölmodifizierten Alkydharzes oder des fettsäuremodifizierten Alkydharzes innerhalb eines Bereichs von 1 bis 50 liegt, und die Hydroxylzahl des ölmodifizierten Alkydharzes oder des fettsäuremodifizierten Alkydharzes innerhalb eines Bereichs von 50 bis 200 liegt.

2. Tinte für einen Strahldrucker gemäß Anspruch 1, wobei die Gesamtmenge an Ölen oder Fettsäuren der Gruppe, bestehend aus Castoröl, Castoröl-Fettsäuren, hydriertem Castoröl, hydrierten Castoröl-Fettsäuren, Rizinusölsäure und 12-Hydroxystearinsäure 30 Massen-% oder mehr des Modifizierungsmittels darstellt.

3. Tinte für einen Strahldrucker gemäß Anspruch 2, wobei das ölmodifizierte Alkydharz oder fettsäuremodifizierte Alkydharz eine oder mehrere mehrprotonige(n) Säure(n) umfasst, ausgewählt aus der Gruppe, bestehend aus Phthalsäure, Phthalsäureanhydrid und Isophthalsäure als einer Struktureinheit, und die Gesamtmenge der aus den mehrprotonigen Säuren der Gruppe gebildeten Struktureinheiten 30 Mol-% oder mehr der gesamten Struktureinheiten der mehrprotonigen Säuren darstellt.

4. Tinte für einen Strahldrucker gemäß Anspruch 1, wobei das ölmodifizierte Alkydharz oder fettsäuremodifizierte Alkydharz ein urethanmodifiziertes Alkydharz ist, bei welchem ein Isocyanat an Hydroxylgruppen innerhalb des Harzes gebunden ist.

5. Tinte für einen Strahldrucker gemäß einem beliebigen der Ansprüche 1 und 4, wobei die Tinte für den Druck eines Musters eines Außenwandverkleidungsmaterials verwendet wird.

6. Außenwandverkleidungsmaterial, umfassend eine Tintenstrahlüberzugsschicht und eine Oberflächenschutzschicht, die nacheinander auf ein Substrat eines Außenverkleidungsmaterials laminiert sind, entweder direkt oder mit einer dazwischen angeordneten Unterschicht, wobei die Tintenstrahlüberzugsschicht gebildet wird unter Verwendung einer Tinte für einen Strahldrucker gemäß Anspruch 5, durch Auftragen der Tinte auf das Substrat oder die Unterschicht unter Verwendung eines Tintenstrahlverfahrens.

7. Verfahren zur Herstellung eines Außenwandverkleidungsmaterials, umfassend: Bilden einer Tintenstrahlüberzugsschicht unter Verwendung eines Tintenstrahlverfahrens, entweder direkt auf einem Substrat eines Außenwandverkleidungsmaterials oder auf einer Unterschicht nach Bildung der Unterschicht auf dem Substrat, und nachfolgendes Bilden einer Oberflächenschutzschicht über eine gesamte Oberfläche der Tintenstrahlüberzugsschicht, wobei die Tintenstrahlüberzugsschicht gebildet wird unter Verwendung einer Tinte für einen Strahldrucker gemäß Anspruch 5.

## Revendications

1. Encre pour imprimante à jet d'encre, comprenant un pigment, une résine filmogène et un solvant organique, dans laquelle ladite résine filmogène comprend, comme composant principal, une résine alkyde modifiée par huile ou une résine alkyde modifiée par acide gras avec une longueur d'huile de 20 à 70 %, qui a été modifiée avec un modificateur comprenant une ou plusieurs huiles ou acides gras choisis dans le groupe constitué par l'huile de ricin, les acides gras d'huile de ricin, l'huile de ricin hydrogénée, les acides gras d'huile de ricin hydrogénée, l'acide ricinoléique et l'acide 12-hydroxystéarique, l'indice d'acide de la résine alkyde modifiée par huile ou la résine alkyle modifiée par acide gras est dans une plage de 1 à 50, et
l'indice d'hydroxyle de la résine alkyle modifiée par huile ou la résine alkyle modifiée par acide gras est dans une plage de 50 à 200.

2. Encre pour imprimante à jet d'encre selon la revendication 1, dans laquelle une quantité totale d'huiles ou d'acides gras dudit groupe constitué par l'huile de ricin, les acides gras d'huile de ricin, l'huile de ricin hydrogénée, les acides gras d'huile de ricin hydrogénée, l'acide ricinoléique et l'acide 12-hydroxystéarique représente 30 % en masse ou plus dudit modificateur.

3. Encre pour imprimante à jet d'encre selon la revendication 2, dans laquelle ladite résine alkyde modifiée par huile ou résine alkyde modifiée par acide gras comprend un ou plusieurs acides polybasiques choisis dans le groupe constitué par l'acide phtalique, l'anhydride phtalique et l'acide isophtalique en tant que motif structurel, et une quantité total de motifs structurels formés d'acides polybasiques dudit groupe représente 30 % en mol ou plus de tous les motifs structurels d'acide polybasique.

4. Encre pour imprimante à jet d'encre selon la revendication 1, dans laquelle ladite résine alkyde modifiée par huile ou résine alkyde modifiée par acide gras est une résine alkyde modifiée par uréthane dans laquelle un isocyanate est lié à des groupes hydroxyle au sein de ladite résine.

5. Encre pour imprimante à jet d'encre selon l'une quelconque de la revendication 1 et de la revendication 4, dans laquelle ladite encre est utilisée pour imprimer un dessin d'un matériau de parement de mur extérieur.

6. Matériau de parement de mur extérieur, comprenant une couche de revêtement à jet d'encre et une couche protectrice de surface stratifiée en séquence au-dessus d'un substrat d'un matériau de parement de mur extérieur, soit directement, soit avec une sous-couche disposée entre eux, dans lequel ladite couche de revêtement à jet d'encre est formée en utilisant une encre pour imprimante à jet d'encre selon la revendication 5, par application de ladite encre sur ledit substrat ou ladite sous-couche à l'aide d'un procédé à jet d'encre.

7. Procédé de production d'un matériau de parement de mur extérieur, comprenant les étapes consistant à : former une couche de revêtement à jet d'encre, en utilisant un procédé à jet d'encre, soit directement au-dessus d'un substrat d'un matériau de parement de mur extérieur, soit au-dessus d'une sous-couche après formation de ladite sous-couche au-dessus dudit substrat, et former ultérieurement une couche protectrice de surface sur l'intégralité d'une surface de ladite couche de revêtement à jet d'encre, dans lequel ladite couche de revêtement à jet d'encre est formée en utilisant une encre pour imprimante à jet d'encre selon la revendication 5.
